# EUROPÄISCHE PATENTSCHRIFT

(11) **EP 3 030 021 B1**
(45) Veröffentlichungstag und Bekanntmachung des Hinweises auf die Patenterteilung: **22.04.2020**
(21) Anmeldenummer: 15197263.5
(22) Anmeldetag: 01.12.2015
(51) Int. Cl.: H04W 64/00, H04W 4/02, H04W 4/14

(54) **VERFAHREN UND VORRICHTUNG ZUM BEREITSTELLEN EINER NACHRICHT**
METHOD AND DEVICE FOR PROVIDING A MESSAGE
PROCEDE ET DISPOSITIF DE FOURNITURE D'UNE INFORMATION

(30) Priorität: 04.12.2014 DE 102014117906
(43) Veröffentlichungstag der Anmeldung: 08.06.2016
(73) Patentinhaber: Maier, Nathalie, 82024 Taufkirchen (DE); Maier, Alexander, 82054 Sauerlach (DE)
(72) Erfinder: Maier, Nathalie, 82024 Taufkirchen (DE); Maier, Alexander, 82054 Sauerlach (DE)
(74) Vertreter: Müller & Schubert

(56) Entgegenhaltungen:
- WO-A1-2014/176646
- WO-A1-2015/034536
- US-A1- 2014 297 758
- US-B1- 8 838 131

## Beschreibung

Die vorliegende Erfindung betrifft zunächst ein Verfahren zum Bereitstellen einer Nachricht gemäß dem Oberbegriff von Patentanspruch 1. Weiterhin betrifft die vorliegende Erfindung ein Verfahren zur Kommunikation gemäß dem Oberbegriff von Patentanspruch 8. Weiterhin betrifft die Erfindung auch eine Vorrichtung zum Bereitstellen einer Nachricht gemäß dem Oberbegriff von Patentanspruch 10.

Im allgemeinen Stand der Technik ist es bereits seit langem bekannt, Nachrichten für elektronische Nutzerendgeräte bereitzustellen. Bekannt ist beispielswiese, dass die Bereitstellung über ein Kommunikationsnetz erfolgt, bei dem es sich beispielsweise um ein Mobilfunknetz oder dergleichen handeln kann. Entsprechende Nachrichten werden in der Regel kommunikationsnetzseitig erzeugt und anschließend auf die elektronischen Nutzerendgeräte übertragen. Dabei ist es im allgemeinen Stand der Technik unter anderem bekannt, dass eine solche Übertragung von Nachrichten auf Basis eines so genannten Push-Verfahrens erfolgen kann. Bei einem Push-Verfahren liegt der Übertragungsweg in einer Richtung von einem Sender, der beispielsweise kommunikationsnetzseitig angesiedelt ist, hin zu einem Empfänger, bei dem es sich um ein elektronisches Nutzerendgerät handelt. Ein Beispiel für einen solchen Push-Dienst ist in der DE 11 2008 001 929 T5 offenbart.

In anderem Zusammenhang sind mit der Bereitstellung von Nachrichten für elektronische Nutzerendgeräte so genannte Location Based Services bekannt. Bei derartigen Services wird eine Nachricht mit räumlichem Bezug erstellt. Elektronische Nutzerendgeräte, die eine Position haben, die diesem räumlichen Bezug entspricht, bekommen diese Information dann zugestellt, was beispielsweise mittels eines oben genannten Push-Dienstes erfolgen kann. Ein Beispiel für einen Location Based Service ist in der EP 1483921 B1 offenbart.

WO 2014/176646 A1 offenbart ein System in dem Endgeräte, die sich zu einen bestimmten Zeitpunkt in der Nähe zu einem bestimmten Event befinden, Eventdaten überspielt bekommen und zeigt eine Verknüpfung von Zeitmarken, die zum Zeitpunkt der Positionsdatenermittlung erzeugt werden, mit Positionsdaten und Adressedaten des elektronischen Nutzerendgeräts zu Nutzerinformationen, die an eine zentrale Rechnereinrichtung im Kommunikationsnetz übertragen werden. In der US 2014/0297758 A1 ist ein Verfahren beschrieben, bei dem Benachrichtigungen über Events basierend auf erlernten Fortbewegungszeiten erzeugt werden. Dabei werden Benachrichtigungen in Abhängigkeit von demjenigen Ort geschickt, an dem sich der Nachrichtenempfänger befindet.

Die US 8,838,131 B1 beschriebt eine Lösung, bei der einer Einrichtung Positionsdaten von mobilen Endgeräten bereitgestellt werden, zu sich in der Nähe zu einem Event befunden haben.

Die bekannten Lösungen laufen in der Regel in der Gegenwart ab und sind nicht dafür konzipiert, für Ereignisse, die bereits in der Vergangenheit stattgefunden haben, eingesetzt zu werden.

Ausgehend vom genannten Stand der Technik liegt der vorliegenden Erfindung deshalb die Aufgabe zugrunde, ein Verfahren sowie eine Vorrichtung der eingangs genannten Art derart weiterzubilden, dass es ermöglicht wird, einem elektronischen Nutzerendgerät eine Nachricht bereitzustellen, die einen Bezug zur Vergangenheit hat oder herstellt.

Diese Aufgabe wird erfindungsgemäß gelöst durch das Verfahren mit den Merkmalen gemäß dem unabhängigen Patentanspruch 1, sowie die Vorrichtung mit den Merkmalen gemäß dem unabhängigen Patentanspruch 10. Weitere Merkmale und Details der Erfindung ergeben sich aus den Unteransprüchen, der Beschreibung sowie den Zeichnungen. Dabei gelten Merkmale und Details, die im Zusammenhang mit einem der erfindungsgemäßen Aspekte beschrieben sind, selbstverständlich auch im Zusammenhang mit den anderen erfindungsgemäßen Aspekten, und jeweils umgekehrt, so dass hinsichtlich der Offenbarung zwischen den Erfindungsaspekten wechselseitig vollinhaltlich aufeinander Bezug genommen und verwiesen wird.

Der Grundgedanke der vorliegenden Erfindung besteht darin, dass insbesondere zur Herstellung eines Vergangenheitsbezugs neben einer Positionsbestimmung auch eine Zeitbestimmung vorgenommen wird, wobei die Zeitbestimmung neben der Positionsbestimmung ein weiteres wesentliches Merkmal und ein weiteres wesentliches Vergleichskriterium darstellt.

Durch die vorliegende Erfindung kann die Bereitstellung von Nachrichten für elektronische Nutzerendgeräte deshalb weiter optimiert werden. Wie dies im Einzelnen realisiert wird, wird im weiteren Verlauf der Beschreibung näher erläutert.

Gemäß dem ersten Aspekt der Erfindung wird ein Verfahren zum Bereitstellen einer Nachricht für wenigstens ein elektronisches Nutzerendgerät bereitgestellt, wobei die Nachricht über ein Kommunikationsnetz mittels eines Push-Verfahrens für das wenigstens eine elektronische Nutzerendgerät bereitgestellt wird. Das Verfahren ist durch folgende Schritte gekennzeichnet:
A) Der Standort des wenigstens einen elektronischen Nutzerendgeräts wird über ein Standortermittlungsverfahren bestimmt, indem Positionsdaten des elektronischen Nutzerendgeräts ermittelt werden,
B) Die ermittelten Positionsdaten werden mit einer Zeitmarke verknüpft, die zum Zeitpunkt der Positionsdatenermittlung erzeugt wird;
C) Die mit der Zeitmarke verknüpften Positionsdaten des elektronischen Nutzerendgeräts werden mit das elektronische Nutzerendgerät kennzeichnenden Informationen, insbesondere mit Adressdaten des elektronischen Nutzerendgeräts, zu Nutzerinformationen verknüpft;
C) Die erzeugten Nutzerinformationen werden an eine zentrale Rechnereinrichtung im Kommunikationsnetz übertragen;
D) In der zentralen Rechnereinrichtung werden ereignisbezogene Informationen empfangen und/oder erzeugt und mit auf die ereignisbezogenen Informationen bezogenen Positionsdaten und Zeitmarken zu Ereignisinformationen verknüpft, oder es werden in der zentralen Rechnereinrichtung ereignisbezogene Informationen empfangen, die mit auf die ereignisbezogenen Informationen bezogenen Positionsdaten und Zeitmarken zu Ereignisinformationen verknüpft sind;
E) In der zentralen Rechnereinrichtung findet ein Vergleich der Nutzerinformationen und der Ereignisinformationen hinsichtlich einer Übereinstimmung von Positionsdaten und Zeitmarken statt, indem die Positionsdaten und die damit verknüpften Zeitmarken der Nutzerinformationen mit den Positionsdaten und den damit verknüpften Zeitmarken der Ereignisinformationen verglichen werden;
F) Bei einer Übereinstimmung der Nutzerinformationen und der Ereignisinformationen sowohl hinsichtlich der Positionsdaten als auch hinsichtlich der Zeitmarken werden die ereignisbezogenen Informationen der entsprechenden Ereignisinformationen als Nachrichten für dasjenige elektronische Nutzerendgerät bereitgestellt, dem die Nutzerinformationen zugeordnet sind.

Gemäß dem ersten Erfindungsaspekt geht es folglich um ein Verfahren zum Bereitstellen einer Nachricht für wenigstens ein elektronisches Nutzerendgerät, wobei die Nachricht über ein Kommunikationsnetz mittels eines Push-Verfahrens für das wenigstens eine elektronische Nutzerendgerät bereitgestellt wird.

Unter dem Bereitstellen einer Nachricht wird dabei insbesondere verstanden, dass die Nachricht dem elektronischen Nutzerendgerät zur Verfügung gestellt oder präsentiert wird, beispielsweise indem die Nachricht zum elektronischen Nutzerendgerät übertragen wird. Das Bereitstellen einer Nachricht im Sinne der vorliegenden Patentanmeldung soll aber auch umfassen, dass die Nachricht, insbesondere kommunikationsnetzseitig, zunächst erzeugt und/oder bearbeitet und anschließend zum elektronischen Nutzerendgerät übertragen wird.

Bei einer Nachricht handelt es sich im Sinne der vorliegenden Patentanmeldung insbesondere um eine Information, die sich quantitativ als Signal und qualitativ als eine Ansammlung von Zeichen, die einen Inhalt festlegen, beschreiben lässt. Eine solche Nachricht wird von einem Sender zu einem Empfänger übermittelt. Gemäß der vorliegenden Erfindung wird die Nachricht über ein Kommunikationsnetz für das elektronische Nutzerendgerät bereitgestellt.

Dabei ist die Erfindung nicht auf bestimmte Typen von Kommunikationsnetzen beschränkt. In bevorzugter Ausgestaltung kann es sich bei dem Kommunikationsnetz um ein Telekommunikationsnetz, insbesondere um ein Mobilfunknetz handeln.

Mobilfunknetze sind bereits seit langem bekannt und dem Fachmann an sich geläufig. Häufig bestehen solche Mobilfunknetze aus einer Anzahl von aneinander angrenzenden Zellen. Das Mobilfunknetz umfasst im Wesentlichen das Mobilvermittlungsnetz, in dem die Übertragung und Vermittlung der Signale zwischen den ortsfesten Einrichtungen und Plattformen des Mobilfunknetzes stattfinden, sowie das Zugangsnetz, in dem die Übertragung der Signale zwischen einer Mobilfunkantenne und dem Mobiltelefon stattfindet. Bewegt sich das Mobiltelefon durch das Mobilfunknetz, was bedeutet, dass das Mobiltelefon aus einzelnen Zellen hinaustritt und in andere, benachbarte Zellen eintritt, so findet bei einem solchen Zellenübertritt in der Regel ein dem Fachmann geläufiger, so genannter Handover-Vorgang statt. Unter einem Handover-Vorgang versteht man insbesondere einen Vorgang in einem zellularen Mobilfunknetz, bei dem das Mobiltelefon während einer aktiven Kommunikationsverbindung ohne Unterbrechung der Kommunikationsverbindung von einer Funkzelle in eine andere wechselt.

In einem Mobilfunknetz erfolgt die Datenübermittlung insbesondere über die bereitgestellte Frequenz zur Datenübertragung. Hier kann über Air oder auch WLAN ein Transfer erfolgen.

Selbstverständlich sind für die Durchführbarkeit des erfindungsgemäßen Verfahrens auch andere Typen von Kommunikationsnetzen möglich.

Bei dem elektronischen Nutzerendgerät handelt es sich bevorzugt um ein mobiles elektronisches Nutzerendgerät. Allerdings ist die Erfindung nicht auf bestimmte Typen von elektronischen Nutzerendgeräten beschränkt. Das elektronische Nutzerendgerät ist insbesondere dem Kommunikationsnetz zugeordnet, Wenn es sich bei dem Kommunikationsnetz um ein Mobilfunknetz handelt, kann das elektronische Nutzerendgerät beispielsweise als Mobiltelefon, Smartphone, als ein Tablet PC oder dergleichen ausgebildet sein.

Erfindungsgemäß wird die Nachricht mittels eines Push-Verfahrens bereitgestellt. Ein Push-Verfahren im Sinne der vorliegenden Patentanmeldung ist insbesondere ein Verfahren, bei dem der Informationsfluss von einem Sender gesteuert wird, und bei dem der Kommunikationsfluss, beispielsweise die Übertragung einer Nachricht, insbesondere unidirektional vom Sender zum Empfänger verläuft. Ein Vorteil für den Nutzer liegt bei einem Push-Verfahren darin, dass er die Informationen nicht aktiv abrufen muss, sondern dass er die Informationen, insbesondere sobald diese entstehen oder aber zu bestimmten Zeitpunkten, automatisch auf sein elektronisches Nutzerendgerät übertragen bekommt.

Das erfindungsgemäße Verfahren dient zur Bereitstellung einer Nachricht für wenigstens ein elektronisches Nutzerendgerät. Dabei ist die Erfindung nicht auf eine bestimmte Anzahl von elektronischen Nutzerendgeräten beschränkt. Bevorzugt dient das Verfahren zum Bereitstellen einer Nachricht für mehr als ein elektronisches Nutzerendgerät, bevorzugt für eine größere Anzahl elektronsicher Nutzerendgeräte. Je nach Ausgestaltung kann das Verfahren auch zum Bereitstellen einer Nachricht für wenigstens eine Gruppe elektronischer Nutzerendgeräte ausgebildet sein. Hierbei kann es sich sowohl um eine offene als auch um eine geschlossene Gruppe handeln. Im Falle einer solchen Gruppe ist bevorzugt vorgesehen, dass ein Nutzer über sein elektronisches Nutzerendgerät, oder das elektronische Nutzerendgerät selbst erst Mitglied der Gruppe werden muss, beispielsweise durch entsprechende Registrierung. Als Gruppe im Sinne der vorliegenden Patentanmeldung werden beispielsweise auch solche Nutzer von elektronischen Nutzerendgeräten, oder elektronische Nutzerendgeräte verstanden, die Mitglied eines bestimmten Dienstes sind oder einen bestimmten Dienst beziehen. Einige Beispiele hierzu werden im weiteren Verlauf der Beschreibung näher erläutert.

Das erfindungsgemäße Verfahren ist durch eine Reihe von Verfahrensschritten gekennzeichnet.

In einem ersten Schritt ist vorgesehen, dass das wenigstens eine elektronische Nutzerendgerät in Bezug auf eine Positionskomponente und eine Zeitkomponente charakterisiert wird. Das bedeutet insbesondere, dass das elektronische Nutzerendgerät durch eine Positionskomponente und durch eine Zeitkomponente definiert oder gekennzeichnet wird. Dabei handelt es sich bei einer Komponente grundsätzlich um einen Wert, einen Bestandteil, eine Einzelheit oder ein Element. Bevorzugt ist vorgesehen, dass das elektronische Nutzerendgerät durch einen Positionswert und durch einen Zeitwert charakterisiert wird. Wesentlich für die vorliegende Erfindung ist es, dass sowohl eine Positionskomponente als auch eine Zeitkomponente vorliegt.

Erfindungsgemäß wird das wenigstens eine Nutzerendgerät in Bezug auf eine Positionskomponente und eine Zeitkomponente derart charakterisiert, dass der Standort des elektronischen Nutzerendgeräts über ein Standortermittlungsverfahren bestimmt wird, indem Positionsdaten des elektronischen Nutzerendgeräts ermittelt werden, und dass die ermittelten Positionsdaten mit einer Zeitmarke verknüpft werden, die zum Zeitpunkt der Positionsdatenermittlung erzeugt wird.

Bei den Positionsdaten handelt es sich insbesondere um Angaben zur geographischen Position des elektronischen Nutzerendgeräts. Eine Zeitmarke, die auch als Zeitstempel bezeichnet werden kann, ist generell eine Information, die eine Zeitangabe darstellt. Durch die Verknüpfung der Positionsdaten mit einer Zeitmarke wird somit eine Aussage erzeugt und möglich, dass sich das elektronische Nutzerendgerät zu einem bestimmten Zeitpunkt an einer bestimmten geographischen Position befindet oder befunden hat. Durch das Setzen von Zeitmarken kann zu einem späteren Zeitpunkt zu dieser Zeit, die dann in der Vergangenheit liegt, zurückgesprungen werden. Es wird somit eine, insbesondere spätere, Aussage erzeugt oder erzeugbar, an welcher geographischen Position sich das elektronische Nutzerendgerät zu einem beliebigen Zeitpunkt in der Vergangenheit befunden hat. Dies ist ein wesentliches Merkmal für die Durchführung des erfindungsgemäßen Verfahrens.

Der Standort des elektronischen Nutzerendgeräts kann beispielsweise über ein geeignetes Standort-Ermittlungsverfahren ermittelt werden, wobei die Erfindung nicht auf bestimmte Standort-Ermittlungsverfahren beschränkt ist. Vorzugsweise können die Positionsdaten mittels eines GSM basierten Standort-Ermittlungsverfahrens und/oder mittels eines auf Satellitenortung basierenden Standort-Ermittlungsverfahrens (etwa GPS oder dergleichen) ermittelt werden. Bei einem solchen Standort-Ermittlungsverfahren läuft die Standortermittlung insbesondere im elektronischen Nutzerendgerät selbst ab. Die Ortung mobiler elektronsicher Nutzerendeinrichtungen kann beispielsweise auch nach dem so genannten EOTD-Verfahren (Enhanced Observed Time Difference) erfolgen, das insbesondere kommunikationsnetzseitig ablaufen kann. Dabei werden Laufzeitunterschiede von Signalen eines Nutzerendgeräts zu mehreren Sendern gemessen. Aus den ermittelten Werten kann dann unter Verwendung geeigneter Algorithmen automatisch der Standort des Nutzerendgeräts ermittelt werden.

Die das elektronische Nutzerendgerät charakterisierende Positionskomponente und die das elektronische Nutzerendgerät charakterisierende Zeitkomponente werden mit das elektronische Nutzerendgerät kennzeichnenden Informationen, insbesondere mit Adressdaten des elektronischen Nutzerendgeräts, zu Nutzerinformationen verknüpft. Hierbei kann es sich je nach Ausgestaltung der elektronischen Nutzerendeinrichtung beispielsweise um eine Rufnummer, eine IP-Adresse, eine IMSI (International Mobile Subscriber Identity), eine IMEI (International Mobile Station Equipment Identity) oder dergleichen handeln. Auf diese Weise wird es möglich, dass das elektronische Nutzerendgerät später netzwerkseitig kontaktiert werden kann, etwa wenn diesem eine Nachricht übermittelt werden soll.

Bevorzugt ist vorgesehen, dass die das elektronische Nutzerendgerät charakterisierende Positionskomponente und die Zeitkomponente, oder aber die Nutzerinformationen zumindest zeitweilig in einer Datenbank abgespeichert werden. Die Datenbank ist insbesondere kommunikationsnetzseitig vorgehalten. Beispielsweise ist die Datenbank ein Bestandteil des Kommunikationsnetzes. In diesem Fall kann die Datenbank vom Betreiber des Kommunikationsnetzes geführt werden. Oder aber, die Datenbank wird von einer zum Netzbetreiber unabhängigen Instanz geführt. In diesem Fall werden die Inhalte der Datenbank dem Netzbetreiber zur Durchführung des Verfahrens zur Verfügung gestellt, indem kommunikationsnetzseitig ein Zugriff auf die Datenbank erfolgt.

Die erzeugten Nutzerinformationen werden an eine zentrale Rechnereinrichtung im Kommunikationsnetz übertragen.

Ein weiterer Schritt des erfindungsgemäßen Verfahrens sieht vor, dass kommunikationsnetzseitig ereignisbezogene Informationen empfangen und/oder erzeugt werden, die in Bezug auf eine Positionskomponente und eine Zeitkomponente charakterisiert werden oder sind. Die empfangenen und/oder erzeugten ereignisbezogenen Informationen werden mit auf die ereignisbezogenen Informationen bezogenen Positionsdaten und Zeitmarken zu Ereignisinformationen verknüpft, oder es werden ereignisbezogene Informationen empfangen, die mit auf die ereignisbezogenen Informationen bezogenen Positionsdaten und Zeitmarken zu Ereignisinformationen verknüpft sind. Beispielsweise kann vorgesehen sein, dass ereignisbezogene Informationen in der zentralen Rechnereinrichtung empfangen und/oder erzeugt werden.

Ein Ereignis ist dabei insbesondere das Auftreten eines beobachtbaren Geschehens. Die Erfindung ist diesbezüglich nicht auf bestimmte Arten von Ereignissen beschränkt. Einige bevorzugte Ausführungsbeispiel hierzu werden im weiteren Verlauf der Beschreibung näher erläutert.

Die ereignisbezogenen Informationen werden bevorzugt von einer zuverlässigen und vertrauenswürdigen Instanz erzeugt oder bereitgestellt. Eine vertrauenswürdige Instanz ist eine solche Instanz, der man problemlos vertrauen kann. Im Rahmen der vorliegenden Erfindung kann es sich bei einer solchen vertrauenswürdigen Instanz beispielsweise um die Polizei, eine stattliche Einrichtung, generell um eine verlässliche Quelle, oder dergleichen handeln. Insbesondere werden die ereignisbezogenen Informationen über eine einer solchen vertrauenswürdigen Instanz zugeordneten Rechnereinrichtung, beispielsweise einer entsprechenden Servereinrichtung, erzeugt oder bereitgestellt. Bei einer solchen vertrauenswürdigen Instanz kann es sich beispielsweise um einen Empfänger handeln, wie er im Zusammenhang mit dem zweiten Erfindungsaspekt weiter unten beschrieben ist.

Auf Seiten des Kommunikationsnetzes werden somit Informationen erzeugt oder empfangen, die auf ein bestimmtes Ereignis bezogen sind, was insbesondere bedeutet, dass diese Informationen ein bestimmtes Ereignis betreffen, und dass diese Informationen zu diesem Ereignis darstellen oder beinhalten. Diese ereignisbezogenen Informationen werden ebenfalls in Bezug auf eine Positionskomponente und eine Zeitkomponente charakterisiert, was in einer wie weiter oben im Zusammenhang mit dem elektronischen Nutzerendgerät geschilderten Weise erfolgen kann. Beim Geschehen eines Ereignisses werden somit ebenfalls der Ort, insbesondere der Ort des Ereignisses, und die Zeit, insbesondere der Zeitpunkt des Ereignisses, bestimmt. Dieses Ereignis kann somit auch in der Vergangenheit liegen. Dabei kann es sich um einige Minuten, aber auch um einen längeren Zeitraum handeln.

Je nach Ausgestaltung des Verfahrens kann vorgesehen sein, dass kommunikationsnetzseitig ereignisbezogene Informationen empfangen werden, die bereits in entsprechender Weise charakterisiert sind. In anderer Ausgestaltung werden ereignisbezogene Informationen empfangen, die dann kommunikationsnetzseitig in entsprechender Weise charakterisiert werden. In weiterer Ausgestaltung werden die ereignisbezogenen Informationen kommunikationsnetzseitig erzeugt und es wird kommunikationsnetzseitig die entsprechende Charakterisierung vorgenommen.

Die ereignisbezogenen Informationen, die in Bezug auf eine Positionskomponente und eine Zeitkomponente charakterisiert werden oder sind, werden kommunikationsnetzseitig derart empfangen und/oder erzeugt, dass kommunikationsnetzseitig ereignisbezogene Informationen empfangen und/oder erzeugt und mit auf die ereignisbezogenen Informationen bezogenen Positionsdaten und Zeitmarken zu Ereignisinformationen verknüpft werden, oder dass kommunikationsnetzseitig ereignisbezogene Informationen empfangen werden, die mit auf die ereignisbezogenen Informationen bezogenen Positionsdaten und Zeitmarken zu Ereignisinformationen verknüpft sind.

Bei den Ereignisinformationen handelt es sich somit um eine Kombination, bestehend aus den eigentlichen ereignisbezogenen Informationen mit der diese Informationen charakterisierenden Positionskomponente und der diese Information charakterisierenden Zeitkomponente.

Dies ermöglicht einen auf einfache Weise durchführbaren Vergleich, wie nachfolgend beschrieben wird.

Erfindungsgemäß ist in einem weiteren Verfahrensschritt vorgesehen, dass kommunikationsnetzseitig ein Vergleich der das elektronische Nutzerendgerät charakterisierenden Positionskomponente und der Zeitkomponente mit der die ereignisbezogenen Informationen charakterisierenden Positionskomponente und der Zeitkomponente erfolgt. Ein solcher Vergleich findet bevorzugt in einer dem Kommunikationsnetz zugeordneten Vergleichseinrichtung statt. Dabei wird der vergleich insbesondere automatisch durchgeführt. Erfindungsgemäß findet in der zentralen Rechnereinrichtung, ein Vergleich der Nutzerinformationen und der Ereignisinformationen hinsichtlich einer Übereinstimmung von Positionsdaten und Zeitmarken statt.

Bei dem Vergleich werden die das elektronische Nutzerendgerät charakterisierende Positionskomponente und die das elektronische Nutzerendgerät charakterisierende Zeitkomponente, die beispielsweise Bestandteil der oben genannten Nutzerinformation sein können, mit Positionskomponenten und Zeitkomponenten verglichen, die die ereignisbezogenen Informationen charakterisieren, und die insbesondere Bestandteil der oben genannten Ereignisinformation sind.

Die das elektronische Nutzerendgerät charakterisierende Positionskomponente und die das elektronische Nutzerendgerät charakterisierende Zeitkomponente, oder aber die Nutzerinformation, sind bevorzugt in einer Datenbank abgelegt. Während des Vergleichsschritts ist vorgesehen, dass die Vergleichseinrichtung die entsprechenden Positionskomponenten und Zeitkomponenten miteinander vergleicht, indem die Ereignisinformation mit vorhandenen Nutzerinformationen verglichen wird. Treten Übereinstimmungen sowohl hinsichtlich der Positionskomponenten als auch hinsichtlich der Zeitkomponenten auf, handelt es sich bei den ereignisbezogenen Informationen um solche, die als Nachricht für das elektronische Nutzerendgerät bereitgestellt werden sollen.

Eine Übereinstimmung der Komponenten liegt beispielsweise dann vor, wenn die verglichenen Komponenten genau oder nahezu identisch sind. Eine Übereinstimmung im Sinne der vorliegenden Patentanmeldung ist aber auch dann gegeben, wenn sich die verglichenen Komponenten innerhalb eines festgelegten Wertebereichs befinden.

Die jeweiligen Positionskomponenten und Zeitkomponenten des elektronischen Nutzerendgeräts und der ereignisbezogenen Informationen werden somit verglichen, und bei einer Übereinstimmung wird den Nutzern eine Information über das Ereignis, gegebenenfalls ergänzt um einen Handlungsbedarf, mitgeteilt.

In einem abschließenden Schritt des erfindungsgemäßen Verfahrens ist deshalb vorgesehen, dass bei einer Übereinstimmung der Positionskomponenten und der Zeitkomponenten die ereignisbezogene Informationen als Nachricht für das elektronische Nutzerendgerät bereitgestellt werden. Insbesondere werden bei einer Übereinstimmung von Positionsdaten und Zeitmarken die ereignisbezogenen Informationen der entsprechenden Ereignisinformationen als Nachrichten an dasjenige elektronische Nutzerendgerät bereitgestellt, dem die Nutzerinformationen zugeordnet sind.

Nachdem die Nachricht auf dem elektronischen Nutzerendgerät bereitgestellt wurde, etwa nachdem diese übertragen worden ist, kann der Nutzer über das elektronische Nutzerendgerät eine Kommunikation zu einem Empfänger aufbauen und eine Kommunikation hinsichtlich der empfangenen Nachricht durchführen. Beispielswiese kann der Nutzer über sein elektronisches Nutzerendgerät dem Empfänger eine auf die Nachricht bezogene Information zukommen lassen. Bei dem Empfänger kann es sich beispielsweise um die weiter oben bereits genannte vertrauenswürdige Instanz, oder um die zentrale Rechnereinrichtung handeln. Beispielsweise kann eine solche Kommunikation aufgebaut werden, indem seitens des elektronischen Nutzerendgeräts eine bestimmte Rufnummer angewählt wird, oder indem das elektronische Nutzerendgerät über einen Aktivierungsbutton verfügt, nach dessen Betätigung der Kommunikationsaufbau, insbesondere direkt, erfolgt. Sofern eine bestimmte Rufnummer angewählt wird, kann diese als Zusatzinformation zusammen mit der Nachricht bereitgestellt werden. Bei dem Aufbau einer solchen Kommunikation handelt es sich bevorzugt um den zweiten Erfindungsaspekt, der weiter hinten beschrieben ist.

Damit wird es mit dem erfindungsgemäßen Verfahren ermöglicht, auch Ereignisse zu berücksichtigen, die bereits in der Vergangenheit liegen, da für die elektronischen Nutzerendgeräte, für die eine auf das Ereignis bezogene Nachricht bereitgestellt wird, auch ermittelt werden kann, wo sich die elektronischen Nutzerendgeräte in der Vergangenheit befunden haben. Bei der vorliegenden Erfindung ist insbesondere das Ereignis wesentlich, bei dem es sich beispielsweise um ein Geschehen handeln kann. Diesbezüglich können nunmehr zeitnahe Daten oder auch Daten aus der längeren Vergangenheit hinzugezogen werden.

Zur Durchführung des Verfahrens ist vorgesehen, dass kommunikationsnetzseitig eine zentrale Rechnereinrichtung vorgesehen ist und dass der Vergleich der das elektronische Nutzerendgerät charakterisierenden Positionskomponente und der Zeitkomponente mit den die ereignisbezogenen Informationen charakterisierenden Positionskomponente und der Zeitkomponente in der zentralen Rechnereinrichtung erfolgt. Bei der zentralen Rechnereinrichtung kann es sich beispielsweise um eine dem Kommunikationsnetz zugeordnete Servereinrichtung handeln, in der insbesondere eine wie weiter oben beschriebene Vergleichseinrichtung angeordnet oder ausgebildet ist. In bevorzugter Ausgestaltung handelt es sich bei der zentralen Rechnereinrichtung um einen Applikationsserver. Bei einem Applikationsserver handelt es sich insbesondere um einen besonderen Server im Kommunikationsnetz, der bestimmte Anwendungsprogramme oder bestimmte Dienste ausführt, die vom Betreiber des Kommunikationsnetzes angeboten werden. Bevorzugte Ausführungsbeispiele hierzu werden in größerem Detail weiter unten beschrieben.

Die weiter oben bereits beschriebenen erzeugten Nutzerinformationen werden an die zentrale Rechnereinrichtung im Kommunikationsnetz übertragen. In der zentralen Rechnereinrichtung werden auch ereignisbezogene Informationen empfangen, beispielsweise von einem Empfänger, etwa einer vertrauenswürdigen Instanz, und/oder erzeugt und mit auf die ereignisbezogenen Informationen bezogenen Positionsdaten und Zeitmarken zu Ereignisinformationen verknüpft, oder es werden in der zentralen Rechnereinrichtung ereignisbezogene Informationen empfangen, die mit auf die ereignisbezogenen Informationen bezogenen Positionsdaten und Zeitmarken zu Ereignisinformationen verknüpft sind. In der zentralen Rechnereinrichtung findet zudem der Vergleich der Nutzerinformationen und der Ereignisinformationen hinsichtlich einer Übereinstimmung von Positionsdaten und Zeitmarken statt. Bei einer Übereinstimmung von Positionsdaten und Zeitmarken werden die ereignisbezogenen Informationen der entsprechenden Ereignisinformationen als Nachrichten für dasjenige elektronische Nutzerendgerät bereitgestellt, dem die Nutzerinformationen zugeordnet sind. Dies kann ebenfalls durch die zentrale Rechnereinrichtung erfolgen.

In bevorzugter Ausgestaltung ist vorgesehen, dass das wenigstens eine elektronische Nutzerendgerät in Bezug auf die Positionskomponente kontinuierlich, oder in definierten Zeitabständen oder ereignisabhängig charakterisiert wird. Bezüglich der Positionskomponente sind somit unterschiedliche Vorgehensweisen möglich.

Beispielsweise kann vorgesehen sein, dass die das elektronische Nutzerendgerät charakterisierenden Positionskomponente im elektronischen Nutzerendgerät erzeugt und an die erforderliche Instanz im Kommunikationsnetz, beispielsweise die zentrale Rechnereinrichtung, übertragen wird. Ebenso ist es möglich, dass die Positionskomponente kommunikationsnetzseitig beim elektronischen Nutzerendgerät abgefragt wird. Die beiden vorgenannten Vorgehensweisen können insbesondere inaktiv, das heißt im Hintergrund ablaufen, ohne dass es eines aktiven Zutuns des Nutzers bedarf, und ohne dass das elektronische Nutzerendgerät aktiv sein muss. Hier reicht es völlig aus, wenn das elektronische Nutzerendgerät zwar eingeschaltet ist, sich aber im Stand-By-Modus befindet.

Bevorzugt kann vorgesehen sein, dass das elektronische Nutzerendgerät in Bezug auf die Positionskomponente kontinuierlich charakterisiert wird. Dies ermöglicht eine sehr genaue Kenntnis über den zeitlichen Verlauf der einzelnen Positionen, erfordert aber einen erhöhten Rechenaufwand und Kommunikationsaufwand. Deshalb ist in anderer Ausgestaltung bevorzugt vorgesehen, dass das elektronische Nutzerendgerät in Bezug auf die Positionskomponente in definierten Zeitabständen charakterisiert wird. Diese Zeitabstände sind grundsätzlich frei einstellbar und ergeben sich insbesondere aus dem Anwendungsgebiet für das erfindungsgemäße Verfahren. Beispielsweise kann ein geeigneter Zeitabstand einige Minuten betragen. Es kann sich aber auch um einen längeren Zeitraum handeln.

In anderer Ausgestaltung kann alternativ oder zusätzlich das elektronische Nutzerendgerät in Bezug auf die Positionskomponente ereignisabhängig charakterisiert werden. Dies kann beispielsweise der Fall sein, wenn das elektronische Nutzerendgerät durch einen neuen Netzbereich des Kommunikationsnetzes versorgt wird. Dies ist beispielsweise dann der Fall, wenn sich das elektronische Nutzerendgerät durch das Kommunikationsnetz bewegt und sich dabei die Position des elektronischen Nutzerendgeräts verändert. Wenn das Kommunikationsnetz zellular aufgebaut ist, kommt es vor, dass das elektronische Nutzerendgerät sich durch die einzelnen Zellen bewegt. Bei einem Zellwechsel findet der weiter oben beschriebene Handover-Vorgang statt. Beispielsweise kann deshalb vorgesehen sein, dass die Position des elektronischen Nutzerendgeräts dann bestimmt wird, wenn ein solcher Handover-Vorgang festgestellt wird oder stattfindet.

In weiterer Ausgestaltung ist bevorzugt vorgesehen, dass eine Übereinstimmung der Positionskomponenten und der Zeitkomponenten vorliegt, wenn die miteinander verglichenen Positionskomponenten und/oder Zeitkomponenten identisch oder nahezu identisch sind, oder wenn die miteinander verglichenen Positionskomponenten und/oder Zeitkomponenten in einem definierten Bereich liegen. Damit kann insbesondere der Umkreis der elektronischen Nutzerendgeräte in Bezug auf die ereignisbezogenen Informationen bestimmt und eingestellt werden. Ein Beispiel hierzu wird im weiteren Verlauf der Beschreibung näher erläutert.

Bevorzugt können die ereignisbezogenen Informationen kommunikationsnetzseitig mit Zusatzinformationen erweitert werden, oder als mit Zusatzinformationen erweiterte ereignisbezogene Informationen empfangen werden. Damit wird es kommunikationsnetzseitig ermöglicht, die ereignisbezogenen Informationen bei Bedarf noch um weitergehende Zusatzinformation, die für den Nutzer des elektronischen Nutzerendgeräts von Interesse oder Bedeutung sein könnten, zu ergänzen. Die weitergehenden Zusatzinformationen können beispielsweise weitergehende Informationen zu einem Ereignis beinhalten, einen situationsbedingten Handlungsbedarf beschreiben, oder dergleichen. In anderer Ausgestaltung können Zusatzinformationen zusätzlich oder alternativ auch Informationen über einen Empfänger, beispielsweise eine vertrauenswürdige Instanz, aufweisen. Solche Zusatzinformationen können beispielsweise eine Adresse, eine Telefonnummer oder dergleichen des Empfängers aufweisen. Damit kann der Nutzer des elektronischen Nutzerendgeräts, nachdem ihm die Nachricht bereitgestellt worden ist, direkt mit dem Empfänger in Kontakt treten, beispielsweise im Wege eines Kommunikationsverfahrens gemäß dem zweiten Aspekt der Erfindung.

Wie weiter oben schon dargelegt wurde, ist die Durchführung des Verfahrens nicht auf eine bestimmte Anzahl elektronsicher Nutzerendgeräte beschränkt. Grundsätzlich ist es für die Durchführbarkeit des Verfahrens ausreichend, wenn nur ein einziges elektronisches Nutzerendgerät vorhanden ist. Bevorzugt werden mittels des Verfahrens Nachrichten für zwei oder mehr elektronische Nutzerendgeräte bereitgestellt. In einer Ausführungsform ist vorgesehen, dass für alle elektronischen Nutzerendgeräte dieselben Nachrichten bereitgestellt werden In anderer Ausgestaltung kann vorgesehen sein, dass für unterschiedliche elektronische Nutzerendgeräte unterschiedliche Nachrichten bereitgestellt werden,

Bevorzugt ist weiterhin vorgesehen, dass das elektronische Nutzerendgerät eine Eingabeeinrichtung aufweist, und dass über die Eingabeeinrichtung Voreinstellungen in Bezug auf die kommunikationsnetzseitig bereitzustellenden Nachrichten erzeugt werden oder erzeugbar sind. Auf diese Weise kann der Nutzer des Verfahrens beispielsweise bestimmen, welche Kriterien für die Nachrichten gelten sollen, beispielsweise in welchen Suchkriterien oder Nachrichtenkriterien er aufgenommen werden will. Der Nutzer kann somit bestimmen für welche Arten von Ereignissen, insbesondere für welche Themen von Ereignissen er Nachrichten bereitgestellt bekommen möchte. Auch kann der Nutzer auf diese Weise bestimmen, welcher geographische Umkreis greifen soll, in welchem er Nachrichten erhalten möchte.

Bevorzugt kann vorgesehen sein, dass der Nutzer oder das elektronische Nutzerendgerät in einem Registrierungsschritt zunächst registriert wird und dass für das elektronische Nutzerendgerät im Registrierungsschritt insbesondere eine Freigabe zur Standortbestimmung erzeugt wird. In einem solchen vorgezogenen Registrierungsschritt registriert sich der Nutzer und schickt insbesondere eine Ortungsfreigabe für sein elektronisches Nutzerendgerät.

Wenn die Nachrichten am Ende des Verfahrens für das elektronische Nutzerendgerät bereitgestellt werden, was insbesondere bedeutet, dass diese Nachrichten auch an das elektronische Nutzerendgerät übertragen werden, können die auf dem elektronischen Nutzerendgerät bereitgestellten Nachrichten durch das elektronische Nutzerendgerät dargestellt werden. Das kann beispielsweise graphisch oder visuell unter Verwendung eines Displays erfolgen, oder aber auch akustisch mittels eines Lautsprechers oder Kopfhörers. Bevorzugt erfolgt die Anzeige durch eine graphische Darstellung.

Gemäß einem zweiten Aspekt der Erfindung wird ein Verfahren zur Kommunikation zwischen einem elektronischen Nutzerendgerät und einem Empfänger bereitgestellt, das dadurch gekennzeichnet, dass dem elektronischen Nutzerendgerät eine Nachricht gemäß dem ersten Erfindungsaspekt bereitgestellt wird und dass das elektronische Nutzerendgerät nach Erhalt der Nachricht mit dem Empfänger, insbesondere über einen Kommunikationskanal, kommuniziert. Bei dem Empfänger kann es sich beispielsweise, wie weiter oben schon beschrieben, um eine vertrauenswürdige Instanz, um eine zentrale Rechnereinrichtung oder dergleichen handeln.

Bevorzugt ist zur Durchführung des Verfahrens gemäß dem ersten Erfindungsaspekt und/oder gemäß dem zweiten Erfindungsaspekt vorgesehen, dass auf dem elektronischen Nutzerendgerät zur Durchführung des Verfahrens ein Client implementiert ist. Ein Client ist dabei insbesondere ein Computerprogramm, das auf dem elektronischen Nutzerendgerät ausgeführt wird, und dass mit einer zentralen Rechnereinrichtung, beispielsweise einem Applikationsserver kommuniziert. Bei einem solchen Client handelt es sich beispielsweise um eine auf dem elektronischen Nutzerendgerät implementierte Applikation, die allgemein auch als App bezeichnet wird. Beispielsweise kann der Nutzer über einen solchen Client seine Daten für die lokale Ermittlung der Position seines elektronischen Nutzerendgeräts freigeben und nimmt damit am System, das das erfindungsgemäße Verfahren anbietet, teil. Der Ablauf des Verfahrens erfolgt auf Seiten des elektronischen Nutzerendgeräts durch den Client. Auch kann der Nutzer die Ortungsfreigabe durch das Akzeptieren der Ortungsfreigabe in dem Client erteilen.

Bevorzugt ist weiterhin ein Computerprogrammprodukt, beispielsweise ein wie vorstehend beschriebener Client, insbesondere in Form einer Applikation, das, wenn es in dem elektronischen Nutzerendgerät geladen und in diesem angespielt wird, derart bereitgestellt ist, dass es in der Lage ist, das Verfahren gemäß dem ersten Erfindungsaspekt und/oder gemäß dem zweiten Erfindungsaspekt auszuführen.

Gemäß einem dritten Aspekt der Erfindung wird eine Vorrichtung zum Bereitstellen einer Nachricht für wenigstens ein elektronisches Nutzerendgerät bereitgestellt, wobei die Nachricht über ein Kommunikationsnetz mittels eines Push-Verfahrens für das wenigstens eine elektronische Nutzerendgerät bereitgestellt wird. Die Vorrichtung ist dadurch gekennzeichnet, dass eine Einrichtung vorgesehen ist, die derart bereitgestellt ist, dass sie in der Lage ist, den Standort des wenigstens einen elektronischen Nutzerendgeräts über ein Standortermittlungsverfahren zu bestimmen, indem Positionsdaten des elektronischen Nutzerendgerät ermittelt werden, die ermittelten Positionsdaten mit einer Zeitmarke zu verknüpfen, die zum Zeitpunkt der Positionsdatenermittlung erzeugt wird, und die mit der Zeitmarke verknüpften Positionsdaten des elektronischen Nutzerendgeräts mit das elektronische Nutzerendgerät kennzeichnenden Informationen, insbesondere mit Adressdaten des elektronischen Nutzerendgeräts, zu Nutzerinformationen zu verknüpfen, dass die Vorrichtung (10) eine zentrale Rechnereinrichtung aufweist, die zum Empfang der Nutzerinformationen ausgebildet ist, dass die zentrale Rechnereinrichtung eine Einrichtung aufweist, die derart bereitgestellt ist, dass sie in der Lage ist, ereignisbezogene Informationen zu empfangen und/oder zu erzeugen und mit auf die ereignisbezogenen Informationen bezogenen Positionsdaten und Zeitmarken zu Ereignisinformationen zu verknüpfen, oder ereignisbezogene Informationen zu empfangen, die mit auf die ereignisbezogenen Informationen bezogenen Positionsdaten und Zeitmarken zu Ereignisinformationen verknüpft sind, dass eine Vergleichseinrichtung vorgesehen ist, die derart bereitgestellt ist, dass sie in der Lage ist, einen Vergleich der Nutzerinformationen und der Ereignisinformationen hinsichtlich einer Übereinstimmung von Positionsdaten und Zeitmarken durchzuführen, und dass eine Schnittstelle vorgesehen ist, die derart bereitgestellt ist, dass sie in der Lage ist, dass bei einer Übereinstimmung von Positionsdaten und Zeitmarken die ereignisbezogenen Informationen der entsprechenden Ereignisinformationen als Nachrichten für dasjenige elektronische Nutzerendgerät bereitgestellt werden, dem die Nutzerinformationen zugeordnet sind.

Zur Ausgestaltung und Funktionsweise der erfindungsgemäßen Vorrichtung wird zur Vermeidung von Wiederholungen zunächst vollinhaltlich auf die vorstehenden Ausführungen zum erfindungsgemäßen Verfahren Bezug genommen und verwiesen. Denn bevorzugt ist die Vorrichtung derart bereitgestellt, dass sie in der Lage ist, ein wie vorstehend beschriebenes erfindungsgemäßes Verfahren durchzuführen. Bevorzugt ist die Vorrichtung derart bereitgestellt, dass sie in der Lage ist, das Verfahren gemäß dem ersten Erfindungsaspekt und/oder gemäß dem zweiten Erfindungsaspekt durchzuführen. Die einzelnen Einrichtungen können je nach Ausgestaltung der Vorrichtung kommunikationsnetzseitig angeordnet oder ausgebildet sein, beispielsweise in einer zentralen Rechnereinrichtung, oder aber in dem elektronischen Nutzerendgerät.

Zusammenfassend kann auch festgehalten werden, dass sich die erfindungsgemäße Lösung von den bisherigen Lösungen abhebt, indem es sich um einen Push-Dienst handelt, der einen Personenkreis, der örtlich begrenzt sein kann, über ein Geschehen, das heißt ein Ereignis, informiert, dass zu einem Zeitpunkt stattgefunden hat, in dem sich der Personenkreis an einem bestimmten Ort, beziehungsweise in einem bestimmten Umkreis zu dem Ort, befunden hat oder befindet. Der Nutzer wird aktiv, zeitnah und zuverlässig informiert. Ein wesentlicher Bestandteil der erfindungsgemäßen Lösung ist dabei, dass zum Zeitpunkt eines Ereignisses die dort oder in einem Umkreis befindlichen Nutzer, beziehungsweise deren elektronische Nutzerendgeräte, informiert werden. Mit der erfindungsgemäßen Lösung wird es somit möglich, in die Vergangenheit zu gehen. Auch kann mit der erfindungsgemäßen Lösung das nahe Umfeld zu dem Ereignis in Betracht gezogen werden.

Das erfindungsgemäße Verfahren, das beispielsweise unter Verwendung oder als eine App durchgeführt werden kann, kann im Verlauf des Verfahrens auch an bestimmte Kriterien gebunden sein oder werden, beziehungsweise nach bestimmten Kriterien wählbar sein.

Alle im Wege des Verfahrens entstehenden Daten, insbesondere die Informationsdaten, werden im Rahmen der Datenschutzrichtlinien bevorzugt wieder gelöscht. Derartige Daten werden auch nicht an Dritte, die nicht Teilnehmer des Verfahrens sind, weitergeleitet.

In einer anderen Ausgestaltung kann die vorliegende Erfindung auch wie folgt beschrieben werden:
Ein Nutzer gibt durch eine Art App seine Daten für die lokale Ermittlung frei und nimmt damit am System teil. Diese Daten werden vom Netzanbieter in regelmäßigen Abständen inaktiv abgefragt oder der Netzanbieter erhält aktiv eine Info wenn der Nutzer durch einen neuen Netzbereich versorgt wird. Diese Daten werden als erste Grundlage (a) verwendet. Beim Geschehen eines Ereignisses wird auch hier die Zeit und der Ort bestimmt. Dieses Ereignis liegt dann unbestimmt in der Vergangenheit. Es kann sich hier um wenige Minuten oder auch um einen längeren Zeitraum handeln. Dies wird als zweite Grundlage (b) verwendet. Die Ermittlung der Grundlage (a) sowie die Info zur Grundlage (b) sind nicht gebunden an ein "Gerät", hier erfolgt die Datenübermittlung über die bereitgestellte Frequenz zur Datenübertragung. Hier kann über Air oder auch WLAN ein Transfer erfolgen. Die Art App hier ist der wesentliche Punkt zur Gegenüberstellung der beiden Grundlagen. Diese beiden greifbaren Daten (a + b) werden verglichen und bei einer Übereinstimmung den Nutzern sofort eine Info über das Ereignis und dem Handlungsbedarf mitgeteilt. Der Umkreis der Nutzer kann bestimmt werden je nach Grundlage (a) und (b). Zur Grundlage (b) ist das Geschehen wesentlich, hier können zeitnahe Daten oder auch Daten aus der längeren Vergangenheit hinzugezogen werden. Handelt es sich bei dem Ereignis beispielsweise um eine Straftat, einen Überfall oder eine Körperverletzung, so können hierzu zeitnah Daten erzeugt und bereitgestellt werden. Bei einer Entführung ist dies erst oft Tage später bekannt, hier verwendet man Daten aus der längeren Vergangenheit.

Beispielsweise kann die erfindungsgemäße Lösung auch so beschrieben werden, dass nach Registrierung und Ortungsfreigabe durch den Nutzer mittels der APP in regelmäßigen Zeitabständen die Position des elektronischen Nutzerendgeräts bestimmt wird, dass diese Position zum Zeitpunkt ihrer Ermittlung mit einem Zeitstempel versehen wird und anschließend mit einer das elektronische Nutzerendgerät eindeutig identifizierenden Information in einer zentralen Datenbank abgespeichert wird. Wenn nun ein Ereignis eintritt, wird seitens des Diensteanbieters der Ort und der Zeitpunkt des Ereignisses bestimmt und mit optional weitergehenden Inhalten verknüpft. Nun werden diese Datenpaare miteinander vergleichen, indem man die vom Diensteanbieter erzeugten Informationen hinsichtlich Zeit und Ort des Ereignisses mit entsprechenden Eintragungen aus der Datenbank vergleicht. Treten hier Übereinstimmungen auf, werden die zu dem Ereignis erzeugten Inhalte an diese elektronischen Nutzerendgeräte, die man ja über die verknüpften identifizierenden Informationen ermitteln und kontaktieren kann, geschickt.

Die vorliegende Erfindung kann bevorzugt im Zusammenhang mit einer Personensuche oder Tätersuche verwendet werden. Durch die erfindungsgemäße Lösung wird insbesondere eine schnellere, häufigere und genauere Personen- und Tätersuche möglich. Die Nutzer eines entsprechenden Dienstes werden aktiv mit einbezogen und handeln zeitnah. Durch die erfindungsgemäße Ausgestaltung der Lösung ist eine einfache Bedienung gewährleistet. Die erfindungsgemäße Lösung ist für eine uneingeschränkte Zielgruppe einsetzbar und transparent aufgebaut.

Falls sich der Täter beziehungsweise eine gesuchte Person in dem Verfahren, beispielsweise in der App registriert hat, so steigt dadurch die Möglichkeit, diesen/diese zu orten. Hat sich ein Täter während des Ereignisses am Ort der Tat befunden, wovon auszugehen ist, so kann dieser auch mit eruiert werden.

Mit der vorliegenden Erfindung wird insbesondere die Zivilcourage eines Nutzers inaktiv herausgehoben.

Das Verfahren, beziehungsweise die App kann auch als Information agieren, etwa dass sich zu einer bestimmten Uhrzeit in einem bestimmten Umkreis des elektronischen Nutzerendgeräts, das eine entsprechende Nachricht bereitgestellt bekommt, eine Person mit einer bestimmten Beschreibung befand.

Die Erfindung wird nun anhand von Ausführungsbeispielen unter Bezugnahme auf die beiliegenden Zeichnungen näher erläutert. Es zeigen
- Figur 1: in schematischer Darstellung eine erfindungsgemäße Vorrichtung, anhand derer das erfindungsgemäße Verfahren erläutert wird;
- Figur 2: ein Detail des erfindungsgemäßen Verfahrensablaufs in Bezug auf eine konkrete Anwendungsform; und
- Figur 3: die einzelnen Zeitkomponenten im erfindungsgemäßen Verfahrensablauf gemäß der konkreten Anwendungsform.

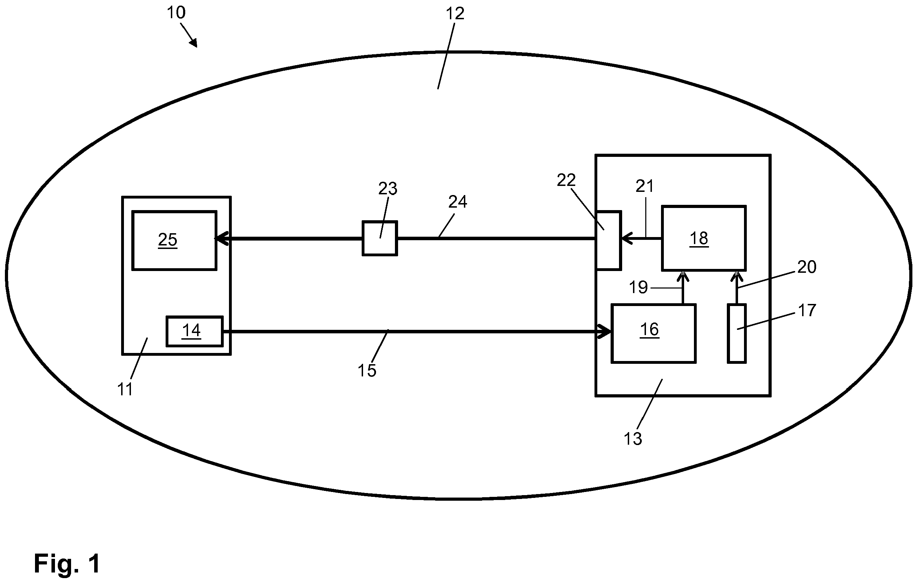

In Figur 1 wird zunächst der allgemeine Aufbau einer erfindungsgemäßen Vorrichtung 10 zum Bereitstellen einer Nachricht 23 für wenigstens ein elektronisches Nutzerendgerät 11 sowie der dazugehörige allgemeine Verfahrensablauf beschrieben, während in den Figur n 2 und 3 Detailansichten bezüglich eines konkreten Anwendungsbeispiels dargestellt sind.

Die Vorrichtung 10 dient dazu, dass Nachrichten 23 über ein Kommunikationsnetz 12, beispielsweise ein Mobilfunknetz, zu einem elektronischen Nutzerendgerät 11 übertragen werden.

Die Vorrichtung 10 weist kommunikationsnetzseitig eine zentrale Rechnereinrichtung 13 in Form eines Applikationsservers auf.

Das elektronische Nutzerendgerät 11, bei dem es sich beispielsweise um ein Smartphone handeln kann, weist eine Einrichtung 14 auf, die derart bereitgestellt ist, dass sie in der Lage ist, das elektronische Nutzerendgerät 11 in Bezug auf eine Positionskomponente und eine Zeitkomponente zu charakterisieren. Diese Einrichtung 14 ermöglicht es, die Position des elektronischen Nutzerendgeräts 11 zu ermitteln und diese ermittelte Position mit einem Zeitstempel zu versehen. Diese Daten werden zudem mit Adressdaten des elektronischen Nutzerendgeräts 11 zu Nutzerinformationen verknüpft. Anschließend werden die Nutzerinformationen zu der zentralen Rechnereinrichtung 13 übertragen, was durch den Übertragungsweg 15 angedeutet ist. In der zentralen Rechnereinrichtung 15 werden die Nutzerinformationen in einer Datenbank 16 abgespeichert.

Die zentrale Rechnereinrichtung 13 weist eine Einrichtung 17 auf, die derart bereitgestellt ist, dass sie in der Lage ist, ereignisbezogene Informationen zu empfangen und/oder zu erzeugen, die in Bezug auf eine Positionskomponente und eine Zeitkomponente charakterisiert sind. Die ereignisbezogenen Informationen können von einer zuverlässigen und vertrauenswürdigen Institution beziehungswiese Instanz bereitgestellt oder erzeugt werden, beispielsweise von der Polizei.

Eine Vergleichseinrichtung 18 der zentralen Rechnereinrichtung 13 ist derart bereitgestellt, dass sie in der Lage ist, einen Vergleich der das elektronische Nutzerendgerät 11 charakterisierenden Positionskomponente und der Zeitkomponente mit den die ereignisbezogenen Informationen charakterisierenden Positionskomponente und der Zeitkomponente durchzuführen. Dazu greift die Vergleichseinrichtung 18 auf die Datenbank 16 und die Einrichtung 17 zu, was durch entsprechende Pfeile 19, 20 verdeutlicht ist, die entsprechende Übertragungswege versinnbildlichen.

Werden bei dem Vergleich hinsichtlich der Position und der Zeit Übereinstimmungen festgestellt, so werden die dazugehörigen ereignisbezogenen Informationen von der Vergleichseinrichtung 18 zu einer Schnittstelle 22 übertragen, was durch den Übertragungsweg 21 verdeutlicht ist. Die Schnittstelle 22 ist derart bereitgestellt, dass sie in der Lage ist, dass bei einer Übereinstimmung der Positionskomponenten und der Zeitkomponenten die entsprechenden ereignisbezogenen Informationen als Nachricht 23 für das elektronische Nutzerendgerät 11 bereitgestellt werden. Dazu wird die Nachricht 23 zu dem elektronischen Nutzerendgerät 11 übertragen, was durch den Übertragungsweg 24 dargestellt ist. Die Übertragung erfolgt im Wege eines Push-Verfahrens. In dem elektronischen Nutzerendgerät 11 wird die Nachricht dem Nutzer schließlich auf einem Display 25 angezeigt.

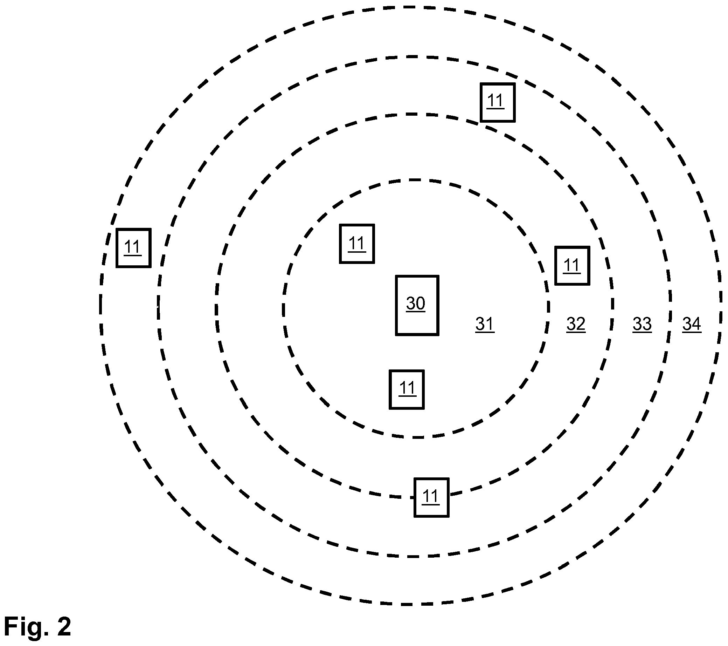

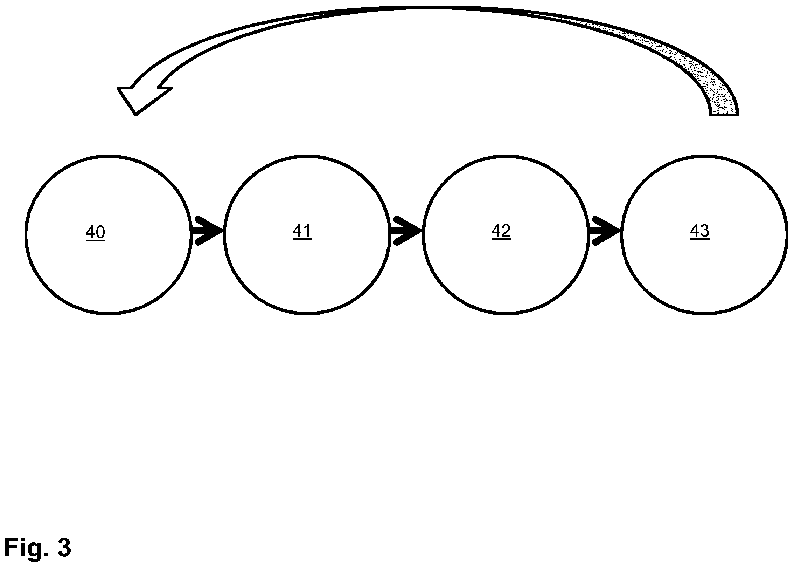

Das erfindungsgemäße Verfahren unter Verwendung einer erfindungsgemäßen Vorrichtung 10 wird nun, auch unter Bezugnahme auf die Figuren 2 und 3, anhand eines bevorzugten Ausführungsbeispiels weiter beschrieben.

Dabei wir die Erfindung für eine mobile Tätersuche oder Personensuche eingesetzt. Ausgangspunkt für diesen konkreten Anwendungsfall ist, dass an einem bestimmten Ort ein Verbrechen stattgefunden hat. Den Täter muss jemand gesehen haben. Keinem war jedoch bewusst, wen er gesehen hat. Durch die erfindungsgemäße Lösung erhalten die Nutzer, die über entsprechende elektronische Nutzerendgeräte 11 verfügen, seitens des Kommunikationsnetzes 12, beispielsweise über die zentrale Rechnereinrichtung 13 eine Nachricht 23 mit folgendem Inhalt:

**Die Polizei sucht**

| | |
|---|---|
| Was ist passiert: | Beschreibung der Art des Verbrechens |
| Wer wird gesucht: | Täterbeschreibung |
| Tatzeit : | Angabe der Tatzeit |
| Tatort : | Angabe des Tatorts |
| Was ist zu tun: | Weitergehende Informationen zur Tat |

Bei der Beschreibung "Was ist passiert" und "Wer wird gesucht" handelt es sich um ereignisbezogene Information. Diese ereignisbezogenen Informationen sind durch eine Positionskomponente, die "Tatzeit", und eine Zeitkomponente, den "Tatort", charakterisiert, wobei beschreibende Informationen zum Tatort und zur Tatzeit zusätzlich auch Bestandteil der an das elektronische Nutzerendgerät übertragenen Nachricht 23 sein können. Die Gesamtheit der Informationen stellt eine Ereignisinformation dar, die zusätzlich noch um weitergehende Informationen, hier "Was ist zu tun", ergänzt sind. Bei den weitergehenden Informationen handelt es sich beispielsweise um weitergehende Informationen zur Tat und beispielsweise zu einem situationsbedingten Handlungsbedarf.

Wie in Figur 2 dargestellt ist, können um den Tatort 30 unterschiedliche Abstandszonen gebildet werden. Im dargestellten Beispiel sind vier Abstandszonen 31, 32, 33, 34 zwischen 1km und 4km dargestellt.

Damit ein Nutzer das erfindungsgemäße Verfahren nutzen kann, gibt der Nutzer durch eine Art App auf seinem elektronischen Nutzerendgerät 11 zunächst seine Daten für die lokale Ermittlung frei und nimmt damit am System teil. Die lokale Ermittlung des elektronischen Nutzerendgeräts, bei dem es sich um die das Nutzerendgerät charakterisierende Positionskomponente handelt, wird vom Netzanbieter in regelmäßigen Abständen inaktiv abgefragt oder in regelmäßigen Abständen an die zentrale Rechnereinrichtung übertragen, wobei dabei stets auch eine Zeitmarke erzeugt wird. Diese Informationen, die noch mit Adressdaten des elektronischen Nutzerendgeräts verknüpft werden, werden als Nutzerinformation in der Datenbank 16 abgespeichert. Dier Datenbank 16 enthält somit eine Fülle von Informationen darüber, welche Nutzerendgeräte 11 sich zu welcher Zeit an welchem Ort 31, 32, 33, 34 befunden haben.

Beim Geschehen der Tat wird auch hier die Zeit und der Ort bestimmt. Diese Informationen werden als Ereignisinformationen bereitgestellt, die zusätzlich noch um die weiteren Informationen ergänzt sind. Die Tat liegt dann unbestimmt in der Vergangenheit. Es kann sich hier um wenige Minuten oder auch um einen längeren Zeitraum handeln.

Die in der zentralen Rechnereinrichtung 13 zur Verfügung stehenden Nutzerinformationen und Ereignisinformationen werden hinsichtlich ihrer Positionskomponenten und Zeitkomponenten verglichen. Treten hierbei Übereinstimmungen auf, werden die ereignisbezogenen Informationen an das elektronische Nutzerendgerät 11 übertragen. Der Nutzer erhält somit sofort eine Information über die Tat und den Handlungsbedarf mitgeteilt.

Beispielsweise kann der Nutzer auf Basis der erhaltenen Nachricht eine Kommunikation zu einem Empfänger aufbauen, beispielsweise zu der vertrauenswürdigen Instanz, und eine Meldung hinsichtlich der Nachricht machen. Beispielsweise kann eine solche Kommunikation aufgebaut werden, indem seitens des elektronischen Nutzerendgeräts 11 eine bestimmte Rufnummer des Empfängers angewählt wird. Beispielsweise kann das elektronische Nutzerendgerät 11 auch über einen Aktivierungsbutton verfügen, der bei Aktivierung automatisch eine entsprechende Kommunikationsverbindung herstellt.

Wie in Figur 2 dargestellt ist, können sich einzelne Nutzer mit ihren elektronischen Nutzerendgeräten 11 zum Zeitpunkt der Tat unterschiedlich weit entfernt vom Tatort 30 in unterschiedlichen Abstandszonen 31, 32, 33, 34 befinden Der Umkreis der Nutzer, die eine entsprechende Nachricht 23 erhalten sollen, kann je nach Bedarf bestimmt werden. Dies trägt zu einer schnelleren Überführung des Täters bei.

Durch die vorliegende Erfindung wird insbesondere eine Reduzierung der Reaktionszeit erreicht, was nachfolgend anhand eines konkreten Beispiels verdeutlicht wird:

| | |
|---|---|
| - Tat/Verlust wird der Polizei / Unternehmen gemeldet | 2 Min |
| - die Polizei / Unternehmen füttert die Plattform mit den erforderlichen Daten und gibt diese automatisiert frei | 1 Min |
| - jeder registrierte Nutzer erhält im erfassten Umkreis per Push-Dienstdie Daten zur Personensuche und eine direkte Durchwahl mit Direktwahl | <1Min |
| - User melden sich und geben die erkannten Daten durch | offen |
| - Zeitnahes Handeln durch die Polizei ist gegeben | 3 Min |

Wesentlicher Bestandteil der Erfindung ist, dass zum Zeitpunkt des Ereignisses die dort befindlichen Nutzer im Umkreis informiert werden. Es wird also in die Vergangenheit gegangen. Auch wird zur Tätersuche eines Flüchtigen das nahe Umfeld in Betracht gezogen.

In Figur 3 sind dazu die einzelnen Zeitkomponenten dargestellt. Im Zeitpunkt 1 findet das Ereignis, beispielsweise die Tat, statt. Im Zeitpunkt 2 wird das Ereignis gemeldet, beispielsweise bei der Polizei und wird damit bekannt. In Zeitpunkt 3 wird die Meldung kommunikationsnetzseitig bereitgestellt. Zum Zeitpunkt 4 werden Nachrichten an diejenigen elektronischen Nutzerendgeräte geschickt, die sich zum Zeitpunkt 1am Ort des Ereignisses, oder aber in einem bestimmten räumlichen Abstand dazu, befunden haben. Dieser Vergangenheitsbezug ist durch den entsprechenden Pfeil in Figur 3 dargestellt.

Die vorliegende Erfindung ist nicht auf bestimmte Suchkriterien beschränkt. Beispielsweise kann die Erfindung im Zusammenhang mit jeder Art von Verbrechen eingesetzt werden, beispielsweise im Zusammenhang mit Kindesentführung mit Foto, Sexualstraftaten, Einbruch, Überfall, aber auch im Zusammenhang mit vermissten Personen, etwa im Zusammenhang mit einer verloren gegangenen Person aus einem Altenheim, einem vermissten Kind, im Zusammenhang mit dem Straßenverkehr und dergleichen.

### Bezugszeichenliste

- 10: Vorrichtung zum Bereitstellen einer Nachricht
- 11: Elektronisches Nutzerendgerät
- 12: Kommunikationsnetz
- 13: Zentrale Rechnereinrichtung
- 14: Einrichtung zum Charakterisieren eines elektronischen Nutzerendgeräts in Bezug auf eine Positionskomponente und eine Zeitkomponente
- 15: Übertragungsweg
- 16: Datenbank
- 17: Einrichtung zum Empfangen und/oder zum Erzeugen ereignisbezogener Informationen, die in Bezug auf eine Positionskomponente und eine Zeitkomponente charakterisiert sind
- 18: Vergleichseinrichtung
- 19: Übertragungsweg
- 20: Übertragungsweg
- 21: Übertragungsweg
- 22: Schnittstelle
- 23: Nachricht
- 24: Übertragungsweg
- 25: Display
- 30: Tatort
- 31: Abstandszone 1
- 32: Abstandszone 2
- 33: Abstandszone 3
- 34: Abstandszone 4
- 40: Zeitpunkt 1
- 41: Zeitpunkt 2
- 42: Zeitpunkt 3
- 44: Zeitpunkt 4

## Patentansprüche

1. Verfahren zum Bereitstellen einer Nachricht (23) für wenigstens ein elektronisches Nutzerendgerät (11), wobei die Nachricht (23) über ein Kommunikationsnetz (12) mittels eines Push-Verfahrens für das wenigstens eine elektronische Nutzerendgerät (11) bereitgestellt wird, **gekennzeichnet durch** folgende Schritte:
A) Der Standort des wenigstens einen elektronischen Nutzerendgeräts (11) wird über ein Standortermittlungsverfahren bestimmt, indem Positionsdaten des elektronischen Nutzerendgeräts (11) ermittelt werden,
B) Die ermittelten Positionsdaten werden mit einer Zeitmarke verknüpft, die zum Zeitpunkt der Positionsdatenermittlung erzeugt wird;
C) Die mit der Zeitmarke verknüpften Positionsdaten des elektronischen Nutzerendgeräts (11) werden mit das elektronische Nutzerendgerät (11) kennzeichnenden Informationen, insbesondere mit Adressdaten des elektronischen Nutzerendgeräts (11), zu Nutzerinformationen verknüpft:
D) Die Nutzerinformationen werden zumindest zeitweilig in einer Datenbank abgespeichert;
E) Die erzeugten Nutzerinformationen werden an eine zentrale Rechnereinrichtung (13) im Kommunikationsnetz übertragen;
F) In der zentralen Rechnereinrichtung (13) werden ereignisbezogene Informationen empfangen und/oder erzeugt und mit auf die ereignisbezogenen Informationen bezogenen Positionsdaten und Zeitmarken zu Ereignisinformationen verknüpft, oder es werden in der zentralen Rechnereinrichtung (13) ereignisbezogene Informationen empfangen, die mit auf die ereignisbezogenen Informationen bezogenen Positionsdaten und Zeitmarken zu Ereignisinformationen verknüpft sind;
G) In der zentralen Rechnereinrichtung (13) findet ein Vergleich der Nutzerinformationen und der Ereignisinformationen hinsichtlich einer Übereinstimmung von Positionsdaten und Zeitmarken statt, indem die Positionsdaten und die damit verknüpften Zeitmarken der Nutzerinformationen mit den Positionsdaten und den damit verknüpften Zeitmarken der Ereignisinformationen verglichen werden;
H) Bei einer Übereinstimmung der Nutzerinformationen und der Ereignisinformationen sowohl hinsichtlich der Positionsdaten als auch hinsichtlich der Zeitmarken werden die ereignisbezogenen Informationen der entsprechenden Ereignisinformationen als Nachrichten für dasjenige elektronische Nutzerendgerät (11) bereitgestellt, dem die Nutzerinformationen zugeordnet sind.

2. Verfahren nach Anspruch 1, **dadurch gekennzeichnet, dass** der Standort des wenigstens einen elektronischen Nutzerendgeräts (11) kontinuierlich, oder in definierten Zeitabständen und/oder ereignisabhängig über das Standortermittlungsverfahren bestimmt wird, indem Positionsdaten des elektronischen Nutzerendgeräts (11) ermittelt und mit einer Zeitmarke verknüpft werden, die zum Zeitpunkt der Positionsermittlung erzeugt wird..

3. Verfahren nach Anspruch 1 oder 2, **dadurch gekennzeichnet, dass** eine Übereinstimmung der Positionskomponenten und der Zeitkomponenten vorliegt, wenn die miteinander verglichenen Positionskomponenten und/oder Zeitkomponenten identisch sind, oder wenn die miteinander verglichenen Positionskomponenten und/oder Zeitkomponenten in einem definierten Bereich liegen.

4. Verfahren nach einem der Ansprüche 1 bis 3, **dadurch gekennzeichnet, dass** die ereignisbezogenen Informationen kommunikationsnetzseitig mit Zusatzinformationen erweitert werden oder als mit Zusatzinformationen erweiterte ereignisbezogene Informationen empfangen werden.

5. Verfahren nach einem der Ansprüche 1 bis 4, **dadurch gekennzeichnet, dass** das elektronische Nutzerendgerät (11) eine Eingabeeinrichtung aufweist, dass über die Eingabeeinrichtung Voreinstellungen in Bezug auf die kommunikationsnetzseitig bereitzustellenden Nachrichten erzeugt werden.

6. Verfahren nach einem der Ansprüche 1 bis 5, **dadurch gekennzeichnet, dass** der Nutzer des elektronischen Nutzerendgeräts (11) oder das elektronische Nutzerendgerät (11) in einem Registrierungsschritt zunächst registriert wird und dass für das elektronische Nutzerendgerät (11) im Registrierungsschritt insbesondere eine Freigabe zur Standortbestimmung erzeugt wird.

7. Verfahren nach einem der Ansprüche 1 bis 6, **dadurch gekennzeichnet, dass** die auf dem elektronischen Nutzerendgerät (11) bereitgestellten Nachrichten (23) durch das elektronische Nutzerendgerät dargestellt werden.

8. Verfahren zur Kommunikation zwischen einem elektronischen Nutzerendgerät (11) und einem Empfänger, **dadurch gekennzeichnet, dass** dem elektronischen Nutzerendgerät (11) eine Nachricht (23) gemäß einem der Ansprüche 1 bis 7 bereitgestellt wird und dass das elektronische Nutzerendgerät (11) nach Erhalt der Nachricht (23) mit dem Empfänger, insbesondere über einen Kommunikationskanal, kommuniziert.

9. Verfahren nach einem der Ansprüche 1 bis 8, **dadurch gekennzeichnet, dass** auf dem elektronischen Nutzerendgerät (11) zur Durchführung des Verfahrens ein Client implementiert ist.

10. Vorrichtung (10) zum Bereitstellen einer Nachricht (23) für wenigstens ein elektronisches Nutzerendgerät (11), wobei die Nachricht (23) über ein Kommunikationsnetz (12) mittels eines Push-Verfahrens für das wenigstens eine elektronische Nutzerendgerät (11) bereitgestellt wird, **dadurch gekennzeichnet, dass** eine Einrichtung (14) vorgesehen ist, die derart bereitgestellt ist, dass sie in der Lage ist, den Standort des wenigstens einen elektronischen Nutzerendgeräts (11) über ein Standortermittlungsverfahren zu bestimmen, indem Positionsdaten des elektronischen Nutzerendgeräts (11) ermittelt werden, die ermittelten Positionsdaten mit einer Zeitmarke zu verknüpfen, die zum Zeitpunkt der Positionsdatenermittlung erzeugt wird, und die mit der Zeitmarke verknüpften Positionsdaten des elektronischen Nutzerendgeräts (11) mit das elektronische Nutzerendgerät (11) kennzeichnenden Informationen, insbesondere mit Adressdaten des elektronischen Nutzerendgeräts (11), zu Nutzerinformationen zu verknüpfen, dass die Vorrichtung (10) eine Datenbank zum zumindest zeitweiligen Abspeichern der Nutzerinformationen aufweist, dass die Vorrichtung (10) eine zentrale Rechnereinrichtung (13) aufweist, die zum Empfang der Nutzerinformationen ausgebildet ist, dass die zentrale Rechnereinrichtung (13) eine Einrichtung (17) aufweist, die derart bereitgestellt ist, dass sie in der Lage ist, ereignisbezogene Informationen zu empfangen und/oder zu erzeugen und mit auf die ereignisbezogenen Informationen bezogenen Positionsdaten und Zeitmarken zu Ereignisinformationen zu verknüpfen, oder ereignisbezogene Informationen zu empfangen, die mit auf die ereignisbezogenen Informationen bezogenen Positionsdaten und Zeitmarken zu Ereignisinformationen verknüpft sind, dass eine Vergleichseinrichtung (18) vorgesehen ist, die derart bereitgestellt ist, dass sie in der Lage ist, einen Vergleich der Nutzerinformationen und der Ereignisinformationen hinsichtlich einer Übereinstimmung von Positionsdaten und Zeitmarken durchzuführen, und dass eine Schnittstelle (22) vorgesehen ist, die derart bereitgestellt ist, dass sie in der Lage ist, dass bei einer Übereinstimmung von Positionsdaten und Zeitmarken die ereignisbezogenen Informationen der entsprechenden Ereignisinformationen als Nachrichten für dasjenige elektronische Nutzerendgerät (11) bereitgestellt werden, dem die Nutzerinformationen zugeordnet sind.

11. Vorrichtung nach Anspruch 10, **dadurch gekennzeichnet, dass** diese derart bereitgestellt ist, dass sie in der Lage ist, ein Verfahren nach einem der Ansprüche 1 bis 9 durchzuführen.

## Claims

1. Method for providing a message (23) for at least one electronic user terminal (11), the message (23) being provided to the at least one electronic user terminal (11) via a communication network (12) by means of a push-method, **characterized by** the following steps:
A) the location of the at least one electronic user terminal (11) is determined by means of a location-determination-procedure, by determining position data of the electronic user terminal (11);
B) the determined position data are linked to a time stamp that is generated at the time of the position data determination;
C) the position data linked to the time stamp of the electronic user terminal (11), and information characterizing the electronic user terminal (11), in particular address data of the electronic user terminal (11), is linked user information;
D) the user information is stored, at least temporarily, in a database;
E) the generated user information is transmitted to a central computer device (13) in the communication network;
F) in the central computer device (13), event-related information is received and/or generated and is linked, combined with position data and time stamps being related to the event-related information, to event information, or event-related information is received in the central computer device (13), which is linked, combined with position data and time stamps being related to the event-related information, to event information;
G) in the central computer device (13), a comparison procedure of the user information and the event information is executed with regard to a match of position data and time stamps, by comparing the position data and the time stamps being linked thereto of the user information with the position data and the time stamps being linked thereto of the event information;
H) if there is a match of the user information with the event information with regard to the position data as well as with regard to the time stamps, the event-related information of the respective event information is provided as messages for the electronic user terminal (11), the user information being allocated to.

2. Method according to claim 1, **characterized in that** the location of the at least one electronic user terminal (11) is determined continuously, or at defined time intervals and/or depending on the event via said location-determination-procedure, by determining position data of the electronic user terminal (11) and linking same to a time stamp, which is generated at the time of the position determination.

3. Method according to claim 1 or 2, **characterized in that** there is a match between the position components and the time components if the compared position components and/or time components are identical, or if the compared position components and/or time components are in a defined range.

4. Method according to anyone of Claims 1 to 3, **characterized in that** the event-related information is expanded on the communication network side with additional information, or is received as event-related information expanded with additional information.

5. Method according to anyone of Claims 1 to 4, **characterized in that** the electronic user terminal (11) has an input device, that default settings relating to the messages to be provided on the communication network side are generated via the input device.

6. Method according to anyone of claims 1 to 5, **characterized in that** the user of the electronic user terminal (11) or the electronic user terminal (11) is initially registered in a registration step and that in particular a release for the location determination for the electronic user terminal (11) is generated in the registration step.

7. Method according to anyone of claims 1 to 6, **characterized in that** the messages (23) provided on the electronic user terminal (11) are represented by the electronic user terminal.

8. Method for communication between an electronic user terminal (11) and a receiver, **characterized in that** the electronic user terminal (11) is provided with a message (23) according to anyone of claims 1 to 7 and that the electronic user terminal (11) after receipt of the message (23) communicates with the receiver, in particular via a communication channel.

9. Method according to anyone of claims 1 to 8, **characterized in that** a client is implemented on the electronic user terminal (11) for carrying out the method.

10. Device (10) for providing a message (23) for at least one electronic user terminal (11), the message (23) being provided via a communication network (12) by means of a push-method for the at least one electronic user terminal (11), **characterized in that** a device (14) is provided, which is configured in such a way that it is capable to determine the location of the at least one electronic user terminal (11) by means of a location-determination-procedure, by determining position data of the electronic user terminal (11), to link the determined position data to a time stamp that is generated at the time of the position data determination and to link the position data linked to the time stamp of the electronic user terminal (11), and information characterizing the electronic user terminal (11), in particular address data of the electronic user terminal (11), to user information, that the device (10) comprises a database for at least temporarily storing the user information, that the device (10) comprises a central computer device (13) which is configured for receiving the user information, that the central computer device (13) comprises a device (17), that is configured in such a way that it is capable of receiving and/or generating event-related information and to link same to position data and time stamps being related to the event-related information, to event information, or to receive event-related information, which is linked, combined with position data and time stamps being related to the event-related information, to event information, that a comparison device (18) is provided, that is configured in such a way that it is capable to perform a comparison of the user information and the event information with regard to a match of position data and time stamps, and that an interface (22) is provided that is configured in such a way that it is capable, if there is a match of position data and time stamps, to provide the event-related information of the respective event information as messages for the electronic user terminal (11), the user information being allocated to.

11. Device according to claim 10, **characterized in that** it is provided in such a way that it is capable to carry out a method according to anyone of claims 1 to 9.

## Revendications

1. Procédé de fourniture d'un message (23) en faveur d'au moins un terminal utilisateur électronique (11), dans lequel le message (23) est fourni via un réseau de communication (12) au moyen d'un procédé « push » en faveur du au moins un terminal utilisateur électronique (11), **caractérisé par** les étapes suivantes :
A) l'emplacement de l'au moins un terminal utilisateur électronique (11) est défini par un procédé de détermination d'emplacement en déterminant des données de position du terminal utilisateur électronique (11),
B) les données de position déterminées sont rattachées à un marqueur temporel qui est généré au moment de la détermination des données de position ;
C) les données de position du terminal utilisateur électronique (11) rattachées au marqueur temporel sont rattachées à des informations caractérisant le terminal utilisateur électronique (11), en particulier à des données d'adresse du terminal utilisateur électronique (11), pour produire des informations utilisateur ;
D) les informations utilisateur sont archivées au moins temporairement dans une base de données ;
E) les informations utilisateur générées sont transmises à un dispositif informatique central (13) dans le réseau de communication ;
F) dans le dispositif informatique central (13) des informations événementielles sont reçues et/ou générées et rattachées aux données de position relatives aux informations événementielles et aux marqueurs temporels pour produire des informations d'événement, ou dans le dispositif informatique central (13) des informations événementielles sont reçues, lesquelles sont rattachées aux données de position relatives aux informations événementielles et aux marqueurs temporels pour produire des informations d'événement ;
G) dans le dispositif informatique central (13) a lieu une comparaison des informations utilisateur et des informations d'événement quant à une concordance des données de position et des marqueurs temporels en comparant les données de position et les marqueurs temporels associés des informations utilisateur aux données de position et aux marqueurs temporels associés des informations d'événement ;
H) en cas de concordance des informations utilisateur et des informations d'événement aussi bien en termes de données de position qu'en termes de marqueurs temporels, les informations événementielles des informations d'événement correspondantes sont fournies en tant que messages en faveur du terminal utilisateur électronique (11) auquel sont associées les informations utilisateur.

2. Procédé selon la revendication 1, **caractérisé en ce que** l'emplacement de l'au moins un terminal utilisateur électronique (11) est spécifié en continu, ou à intervalles temporels définis et/ou en fonction d'un événement via le procédé de détermination d'emplacement en déterminant des données de position du terminal utilisateur électronique (11) et en les rattachant à un marqueur temporel qui est généré au moment de la détermination de position.

3. Procédé selon la revendication 1 ou 2, **caractérisé en ce qu'**il existe une concordance des composantes de position et des composantes de temps lorsque les composantes de position et/ou les composantes de temps comparées entre elles sont identiques ou lorsque les composantes de position et/ou les composantes de temps comparées entre elles se situent dans une plage définie.

4. Procédé selon l'une des revendications 1 à 3, **caractérisé en ce que** les informations événementielles sont élargies côté réseau de communication avec des informations supplémentaires ou sont reçues en tant qu'informations événementielles élargies avec des informations supplémentaires.

5. Procédé selon l'une des revendications 1 à 4, **caractérisé en ce que** le terminal utilisateur électronique (11) comporte un dispositif de saisie qui permet de générer des réglages par défaut du point de vue des messages à fournir côté réseau de communication.

6. Procédé selon l'une des revendications 1 à 5, **caractérisé en ce que** l'utilisateur du terminal utilisateur électronique (11) ou le terminal utilisateur électronique (11) est tout d'abord enregistré dans une étape d'enregistrement et **en ce que** pour le terminal utilisateur électronique (11), dans l'étape d'enregistrement, en particulier une validation pour la détermination d'emplacement est générée.

7. Procédé selon l'une des revendications 1 à 6, **caractérisé en ce que** les messages (23) fournis au terminal utilisateur électronique (11) sont représentés par le terminal utilisateur électronique.

8. Procédé de communication entre un terminal utilisateur électronique (11) et un récepteur, **caractérisé en ce qu'**un message (23) est fourni au terminal utilisateur électronique (11) selon l'une des revendications 1 à 7 et **en ce que** le terminal utilisateur électronique (11) communique avec le récepteur après réception du message (23), en particulier par le biais d'un canal de communication.

9. Procédé selon l'une des revendications 1 à 8, **caractérisé en ce qu'**un client est mis en œuvre pour l'exécution du procédé sur le terminal utilisateur électronique (11).

10. Dispositif (10) de fourniture d'un message (23) en faveur d'au moins un terminal utilisateur électronique (11), dans lequel le message (23) est fourni via un réseau de communication (12) au moyen d'un procédé « push » en faveur du au moins un terminal utilisateur électronique (11), **caractérisé en ce qu'**un dispositif (14) est prévu qui est fourni de telle sorte qu'il est en mesure de spécifier l'emplacement de l'au moins un terminal utilisateur électronique (11) par un procédé de détermination d'emplacement en déterminant des données de position du terminal utilisateur électronique (11), de rattacher les données de position déterminées à un marqueur temporel qui est généré au moment de la détermination des données de position, et de rattacher les données de position du terminal utilisateur électronique (11) rattachées au marqueur temporel aux informations caractérisant le terminal utilisateur électronique (11), en particulier aux données d'adresse du terminal utilisateur électronique (11), pour produire des informations utilisateur, **en ce que** le dispositif (10) comporte une base de données permettant l'archivage au moins temporaire des informations utilisateur, **en ce que** le dispositif (10) comporte un dispositif informatique central (13) qui est conçu pour la réception des informations utilisateur, **en ce que** le dispositif informatique central (13) comporte un dispositif (17) qui est fourni de telle sorte qu'il est en mesure de recevoir et/ou de générer des informations événementielles et de les rattacher à des données de position se rapportant aux informations événementielles et à des marqueurs temporels pour produire des informations d'événement, ou de recevoir des informations événementielles qui sont rattachées à des données de position se rapportant à des informations événementielles et à des marqueurs temporels pour produire des informations d'événement, **en ce qu'**un dispositif de comparaison (18) est prévu, lequel est fourni de telle sorte qu'il est en mesure d'exécuter une comparaison des informations utilisateur et des informations d'événement en termes de concordance des données de position et des marqueurs temporels, et **en ce qu'**une interface (22) est prévue, laquelle est fournie de telle sorte qu'elle est en mesure en cas de concordance des données de position et des marqueurs temporels de fournir les informations événementielles des informations d'événement correspondantes en tant que messages en faveur du terminal utilisateur électronique (11) auquel sont associées les informations utilisateur.

11. Dispositif selon la revendication 10, **caractérisé en ce que** celui-ci est fourni de telle sorte qu'il est en mesure d'exécuter un procédé selon l'une des revendications 1 à 9.
